(19) Europäisches Patentamt
European Patent Office
Office européen des brevets

(11) **EP 2 886 225 B1**

(12) **EUROPEAN PATENT SPECIFICATION**

(45) Date of publication and mention
of the grant of the patent:
**07.06.2017 Bulletin 2017/23**

(51) Int Cl.:
**B22F 1/00** *(2006.01)*          **B22F 3/00** *(2006.01)*
**B23F 3/00** *(2006.01)*          **C22C 19/05** *(2006.01)*

(21) Application number: **13199285.1**

(22) Date of filing: **23.12.2013**

(54) **Gamma prime precipitation strengthened nickel-base superalloy for use in powder based additive manufacturing process**

Ausscheidungsgehärteten Gamma-Prime-Superlegierung auf Nickelbasis zur Verwendung in Verfahren zur Herstellung pulverbasierter Additive

Précipitation gamma prime renforcée par un superalliage à base de nickel destinée à être utilisée dans un processus de fabrication d'additif à base de poudre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2015 Bulletin 2015/26**

(73) Proprietor: **Ansaldo Energia IP UK Limited**
**London W1G 9DQ (GB)**

(72) Inventors:
• **Engeli, Roman**
  **8050 Zurich (CH)**
• **Etter, Thomas**
  **5037 Muhen (CH)**
• **Meidani, Hossein**
  **8052 Zurich (CH)**

(74) Representative: **Bernotti, Andrea et al**
**Studio Torta S.p.A.**
**Via Viotti, 9**
**10121 Torino (IT)**

(56) References cited:
**EP-A1- 2 589 449**

• C.Y SU ET AL: "Activated diffusion brazed repair for IN738 hot section components of gas turbines", JOURNAL OF MATERIALS PROCESSING TECHNOLOGY, vol. 115, no. 3, 26 August 1999 (1999-08-26), pages 326-332, XP055108216, ISSN: 0924-0136, DOI: 10.1016/S0924-0136(01)00831-7

• "ALLOY IN-738 TECHNICAL DATA", THE INTERNATIONAL NICKEL COMPANY INC, , 1 January 2013 (2013-01-01), page 12pp, XP009177112, Retrieved from the Internet: URL:http://www.nipera.org/~/Media/Files/Te chnicalLiterature/IN_738Alloy_PreliminaryD ata_497_.pdf

• M.F. CHIANG ET AL: "Induction-assisted laser welding of IN-738 nickel-base superalloy", MATERIALS CHEMISTRY AND PHYSICS, vol. 114, no. 1, 1 March 2009 (2009-03-01) , pages 415-419, XP055108208, ISSN: 0254-0584, DOI: 10.1016/j.matchemphys.2008.09.051

• CHEN J ET AL: "Process-induced microstructural characteristics of laser consolidated IN-738 superalloy", MATERIALS SCIENCE AND ENGINEERING A: STRUCTURAL MATERIALS:PROPERTIES, MICROSTRUCTURE & PROCESSING, LAUSANNE, CH, vol. 527, no. 27-28, 25 October 2010 (2010-10-25), pages 7318-7328, XP027339252, ISSN: 0921-5093 [retrieved on 2010-08-10]

• E. F. Bradley: "Superalloys A Technical Guide", 1 August 1989 (1989-08-01), ASM International, United States of America, XP002722150, ISBN: 9780871703279 * page 144 - page 147; figure 10.3; table 10.1 *

EP 2 886 225 B1

- L. Rickenbacher ET AL: "High temperature material properties of IN738LC processed by selective laser melting (SLM) technology", Rapid Prototyping Journal, 1 April 2013 (2013-04-01), pages 282-290, XP055109051, Bradford DOI: 10.1108/13552541311323281 Retrieved from the Internet: URL:http://search.proquest.com/docview/135 5328844 [retrieved on 2014-03-20]
- MINLIN ZHONG ET AL: "Boundary liquation and interface cracking characterization in laser deposition of Inconel 738 on directionally solidified Ni-based superalloy", SCRIPTA MATERIALIA, vol. 53, no. 2, 1 July 2005 (2005-07-01), pages 159-164, XP055108323, ISSN: 1359-6462, DOI: 10.1016/j.scriptamat.2005.03.047
- OSAKADA ET AL: "Flexible manufacturing of metallic products by selective laser melting of powder", INTERNATIONAL JOURNAL OF MACHINE TOOL DESIGN AND RESEARCH, PERGAMON PRESS, OXFORD, GB, vol. 46, no. 11, 1 September 2006 (2006-09-01), pages 1188-1193, XP005572810, ISSN: 0020-7357, DOI: 10.1016/J.IJMACHTOOLS.2006.01.024

**Description**

**BACKGROUND OF THE INVENTION**

The present invention relates to the technology of producing three-dimensional articles by means of powder-based additive manufacturing, such as selective laser melting (SLM) or electron beam melting (EBM). Especially, it refers to a high oxidation resistant and high gamma-prime ($\gamma'$) precipitation containing Ni-base super alloy powder on basis of IN738LC with a modified chemical composition for manufacturing of nearly crack free components.

**PRIOR ART**

Gamma-prime ($\gamma'$) precipitation-strengthened nickel-base superalloys with a combined fraction of Al and Ti of about more than 5 wt.-% are known to be very difficult to weld because of their micro-crack sensitiveness. Micro-cracking during welding of those superalloys, such as IN738LC, MARM-M 247 or CM247LC is attributed to the liquation of precipitates or low-melting eutectics in the heat affected zone (HAZ), ductility dip cracking (DDC) or strain-age cracking in subsequent heat treatment.

In the document: C.Y Su et al: Activated diffusion brazed repair for IN738 hot section components of gas turbines, Journal of Materials Processing Technology, vol. 115, no. 3, 1999, pages 326-332, the authors disclose a IN738LC superalloy powder with a high gamma-prime precipitation content, used in activated diffusion brazing, with following chemical composition (in wt. -%): 16.0 Cr, 8.4 Co, 1.7 Mo, 2.7W, 1.7 Ta, 3.4 Al, 3.4 Ti, 0.8 Nb, 0.10 C, 0.01 B, 0.03 Zr, the remainder being Ni and unavoidable residual elements.

In the document: B. Geddes, H. Leon, X. Huang: Superalloys, Alloying and performance, ASM International, 2010, page 71-72, the authors describe a weldability line for superalloys approximately as [two times Al concentration (in wt.-%) + Ti concentration (in wt. %)] < 6.0, this means that Ni base superalloys with more than 6 wt.- % of [2 times Al (in wt. -%)+ Ti (in wt. -%)] are defined as difficult to weld materials. Solidification and grain boundary liquation cracking occurs during the welding process, whereas post-weld heat treatments often lead to strain age cracking in gamma-prime $Ni_3(Al,Ti)$ precipitate strengthened alloys.

Therefore, mainly solid-solution strengthened (e.g. IN625) or gamma-prime strengthened nickel-base superalloys with a low amount of Al and Ti (e.g. IN718) are processed by SLM or EBM so far.

Document DE 10 2009 050 563 A1 describes a Ni-base superalloy for use in additive manufacturing, preferably laser melting, with a defined Ti-content from 0.3 to 1.2 wt. -% and/or an Al-content from 2.5 to 5.7 wt. -% with a preffered total content of Ti and Al in a range from 2.8 to 5.0 wt. -%.

In a common approach to process difficult to weld gamma-prime precipitation-strengthened nickel-base superalloys, a powder bed is heated to an elevated temperature to reduce residual stresses resulting from the welding process. But, before the finished parts can be removed from the powder bed, it has to be cooled down to ambient temperature. Due to the low heat conductivity of powder beds, the heating up and cooling down of the powder bed requires a lot of time resulting in a significant decrease in productivity of the SLM process. Furthermore expensive heating equipment and isolation as well as adaptation of the process chamber are needed.

EP 2 589 449 A1 discloses a SLM process for the production of crack-free and dense three-dimensional articles made of difficult to weld gamma-prime precipitation-strengthened Nickel- base superalloy wherein the laser power, focus diameter of the focal spot and the scan speed of said focused laser beam are adjusted to obtain heat dissipation welding.

In general, SLM generated articles have different microstructures compared to cast material of the same alloy. This is primary due to powder based layer-by-layer article production and the inherent high cooling rates due to the high energy beam/ material interaction in these processes. Due to the extremely localized melting and the resulting rapid solidification during SLM, segregation of alloying elements and formation of precipitations is considerably reduced, which results in a decreased sensitivity for cracking compared to conventional build-up welding techniques.

By using commercially available IN738LC powder for the SLM process unfortunately microcracks are still present in the manufactured articles. This was for example confirmed in a presentation by Fraunhofer Institute for Laser Technology (J. Risse, C. Golebiewski, W. Meiners, K. Wissenbach: Influence of process management on crack formation in nickel-based alloy parts (IN738LC) manufactured by SLM, RapidTech, 14./15.05.2013, Erfurt). It was stated there that crack free articles can only be manufactured with an extensive preheating.

However, the applicant has found out that by using IN738LC with adjusted chemistry, SLM allows the near-net shape processing of this difficult to weld material. A high Al and Ti content of gamma-prime ($\gamma'$) precipitation-strengthened nickel-base superalloys is not the main reason for cracking and that hot cracking susceptibility of SLM processed IN738LC cannot be predicted by classic weldability charts.

**SUMMARY OF THE INVENTION**

It is an object of the present invention to provide a Nickel-base superalloy powder with high gamma-prime precipitation content for additive manufacturing (SLM, EBM) of three-dimensional articles with a reduced hot cracking tendency and disclose suitable process parameter for manufacturing such an article. The modified composition of the powder according to the present invention is based on known commercially available Inconel 738 (IN738LC) powder with a specification of (in wt. -%): 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.03-0.08 Zr, max. 0.3 Si, remainder Ni and unavoidable residual elements (impurities).

This object is realized by a powder composition according to claim 1 with a powder size distribution between 10 and 100 $\mu$m and a spherical morphology.

The core of the invention is that by a tight control and modification of specific minor/trace elements (0.004≤Zr<0.03 wt. -% and 0.001≤Si<0.03 wt. -%) in the IN738LC alloy powder with the above-mentioned powder size distribution and morphology of the powder crack free or at least nearly crack free components can be produced by SLM without preheating. It was found that the known limitation of maximal 0.3 wt. -% Si and maximal 0.08 wt. -% Zr for commercially available IN738LC powder is too high for use of this powder in powder based additive manufacturing, like SLM or EBM. In contrast to the state of the art knowledge not the (Al+Ti) content is limiting the processability, but the minor concentrations of Si and Zr.

In preferred embodiments the Si content of the powder is max. 0.02 wt. -% and/or the Zr content is max. 0.02 wt. -%.

The SLM process parameters are chosen such that the Laser area energy density $E_D$ during SLM process is according to the invention in the range between 0.5-10 J/mm². $E_D$ is calculated as follows:

$$E_D = \frac{P_L}{V_s \cdot D_B}$$

with $P_L$: Laser Power [W]
$V_S$: Scan velocity [mm/s]
$D_B$: Laser beam diameter [mm].

According to a preferred embodiment of the invention the Laser area energy density is between 0.8 and 5 J/mm², preferably between 1-3.5 J/mm².

According to another embodiments of the invention the layer thickness of each SLM layer is in the range of 0.01-0.1 mm, preferably 0.02-0.05 mm and most preferably 0.03-0.04 mm. Then nearly crack free components, for example gas turbine components, can be produced.

## BRIEF DESCRIPTION OF THE DRAWINGS

The present invention is now to be explained more closely by means of different embodiments and with reference to the attached drawings.

Fig. 1    shows the microstructure of a SLM test probe made of standard IN738LC powder (prior art) with a high density of microcracks;

Fig. 2    shows the microstructure of a SLM test probe made of a modified powder according to a first embodiment of the invention with a reduced density of microcracks compared to Fig. 1;

Fig. 3    shows in detail the average crack density for using the prior art powder and for using several embodiments according to the present invention;

Fig. 4    shows the crack density dependency on the Zr content in the tested powder and

Fig. 5    shows the crack density dependency on the Si content in the tested powder.

## DETAILED DESCRIPTION OF DIFFERENT EMBODIMENTS OF THE INVENTION

As described above it was found out that a high Al and Ti content of gamma-prime ($\gamma$') precipitation-strengthened nickel-base superalloys is not the main reason for cracking and that hot cracking susceptibility of SLM processed IN738LC powder cannot be predicted by classic weldability charts. In contrast, a tight control of specific minor/trace elements (Zr, Si) is necessary as well as using a powder with a powder size distribution between 10 and 100 $\mu$m and a spherical morphology.

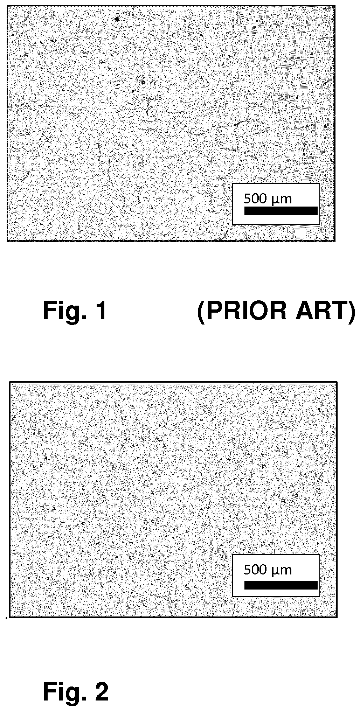

Fig. 1 shows the microstructure of a SLM test probe (three-dimensional article) made of standard IN738LC powder (commercial available prior art) with a specification of (in wt. -%): 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.03-0.08 Zr, max. 0.3 Si, remainder Ni and unavoidable residual elements (impurities). IN738LC is high oxidation resistant and has a high content of gamma-prime ($\gamma$') precipitations.The details are for Zr content 0.06 wt. -% and for Si content 0.085 wt.- %. It can be seen in Fig. 1, that the probe according to the prior art has a high density of microcracks.

The core of the invention is that by a tight control and modification of specific minor/trace elements (0.004≤Zr<0.03 wt. -% and 0.001≤Si<0.03 wt. -%) in the IN738LC alloy powder with the above-mentioned powder size distribution and morphology of the powder crack free or at least nearly crack free components (three-dimensional articles) can be produced by SLM without preheating. It was found that the known limitation of maximal 0.3 wt. -% Si and 0.08 wt. -% Zr for commercially available IN738LC powder is too high for use of this powder in powder based additive manufacturing, like SLM, EBM. In contrast to the state of the art knowledge not the (Al+Ti) content is limiting the processability, but the minor concentrations of Si and Zr.

Therefore, several Nickel-base powders with a chemical composition of 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.004≤Zr<0.03, 0.001≤Si<0.03, remainder Ni and unavoidable residual elements and with powder size distribution between 10 and 100 $\mu$m and a spherical morphology were tested for additive manufacturing of three-dimensional articles.

Fig. 2 shows a first embodiment of the invention. The article was produced by SLM with a powder according to the invention, here with Zr< 0.03 wt. -% and Si= 0.0176 wt. -%. During the layer by layer built up of the article the Laser power $P_L$, the scan velocity $V_S$ and the Laser beam diameter of SLM were chosen/applied such that the Laser area energy density $E_D$ was in the range between 0.5-10 J/mm$^{2,}$, here in detail $E_D$ was 1.8 J/ mm$^2$. Preferred ranges of the Laser area energy density are 0.8-5 J/mm$^2$, more preferred 1-3.5 J/mm$^2$.

It can be seen in Fig. 2 that the probe according to the invention has only a very low microcrack density compared to Fig. 1.

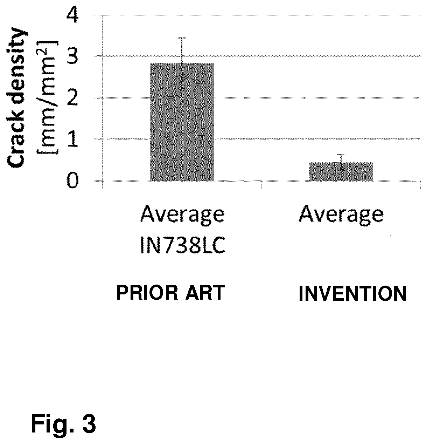

In Fig. 3 is shown in detail the average crack density for using the prior art powder and for using several embodiments according to the present invention. The tight control of the elements Si and Zr considerably reduces hot cracking during SLM or EBM, resulting in defect densities which are by a factor of 6 lower compared to the commercial available IN738LC.

Therefore, nearly crack free three-dimensional articles can be produced with more productive process parameters and without complicated and time consuming variations of the addive manufacturing processes (e.g. pre-heating) and/or post processing (e.g. hot isostatic pressing HIP).

Each of the layers applied within the SLM or EBM process have a thickness in the range of 0.01-0.1 mm, preferably in the range of 0.02-0.05 mm. A more peferred range is 0.03-0.04 mm.

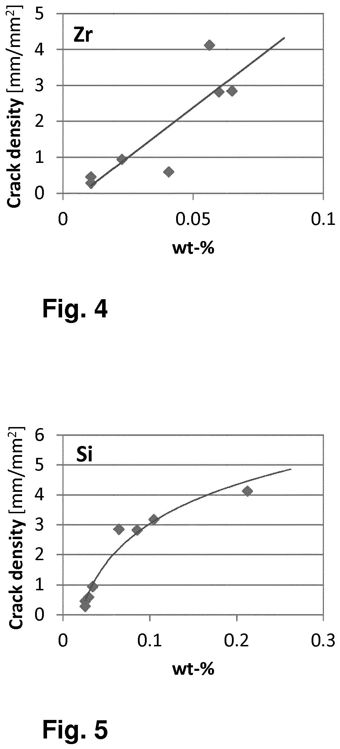

In Fig. 4 is shown as an example for different SLM probes made of IN738LC powder the crack density dependency on the Zr content in the tested powder and in Fig. 5 the crack density dependency on the Si content in the tested powder.

Much reduced crack density is received for the disclosed ranges (in wt. -%) of (0.004≤Zr<0.03 and 0.001≤Si<0.03. Max. 0.02 wt. -% Zr and/or max 0.02 wt. -% Si are preferred because of the nearly microcrack free microstructure.

Of course, the invention is not limited to the decribed embodiments. For example, it is expected that the disclosed nickel-base superalloy powder is applicable not only for SLM manufacturing process but also for EMB manufacturing process with the described advantages.

## Claims

1. Nickel-base superalloy powder with a high gamma-prime precipitation content for additive manufacturing of three-dimensional articles **characterized in that** the powder has the following chemical composition (in wt. -%): 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.004≤Zr<0.03, 0.001≤Si<0.03, remainder Ni and unavoidable residual elements and wherein the powder has a powder size distribution between 10 and 100 $\mu$m and a spherical morphology.

2. Nickel-base superalloy powder according to claim 1, **characterized in that** the Si content is max. 0.02 wt. -%.

3. Nickel-base superalloy powder according to claim 1, **characterized in that** the Zr content is max. 0.02 wt. -%.

4. SLM process for additive manufacturing of three-dimensional articles with the Nickel-base superalloy powder according to one of claims 1-3, **characterized in that** the Laser power $P_L$, the scan velocity $V_S$ and the Laser beam diameter $D_B$ during the layer by layer built-up of the article are applied such that the Laser area energy density $E_D$ is in the range between 0.5-10 J/mm$^2$.

5. SLM process according to claims 4, **characterized in that** the Laser area energy density $E_D$ is between 0.8 and 5 J/mm$^2$.

6. SLM process according to claim 5, **characterized in that** the Laser area energy density $E_D$ is between 1-3.5 J/mm$^2$.

7. SLM process according to claim 4, **characterized in that** layers are applied with a thickness of each layer in the range of 0.01-0.1 mm.

8. SLM process according to claim 7 characterzied in that layers are applied with a thickness of each layer in the range of 0.02-0.05 mm.

9. SLM process according to claim 8 characterzied in that layers are applied with a thickness of each layer in the range of 0.03-0.04 mm.

## Patentansprüche

1. Auf Nickel basierendes Superlegierungspulver mit einem hohen Gamma-Prime-Ausfällungsgehalt zur additiven Herstellung dreidimensionaler Gegenstände, **dadurch gekennzeichnet, dass** das Pulver die folgende chemische Zusammensetzung (in Gew.-%) aufweist: 15,7-16,3 Cr, 8,0-9,0 Co, 1,5-2,0 Mo, 2,4-2,8 W, 1,5-2,0 Ta, 3,2-3,7 Al, 2,2-3,7 Ti, 0,6-1,1 Nb, 0,09-0,13 C, 0,007-0,012 B, 0,004 ≤ Zr <0,03, 0,001 ≤ Si <0,03, Rest Ni und unvermeidbare, zurückbleibende Elemente, wobei das Pulver eine Verteilung der Pulvergröße in einem Bereich von 10 bis 100 μm und eine kugelförmige Morphologie aufweist.

**2.** Auf Nickel basierendes Superlegierungspulver nach Anspruch 1, **dadurch gekennzeichnet, dass** der Si-Gehalt maximal 0,02 Gew.-% beträgt.

**3.** Auf Nickel basierendes Superlegierungspulver nach Anspruch 1, **dadurch gekennzeichnet, dass** der Zr-Gehalt maximal 0,02 Gew.-% beträgt.

**4.** SLM-Prozess zur additiven Herstellung dreidimensionaler Gegenstände mit dem auf Nickel basierenden Superlegierungspulver nach einem der Ansprüche 1-3, **dadurch gekennzeichnet, dass** die Laserleistung $P_L$, die Abtastgeschwindigkeit Vs und der Laserstrahldurchmesser $D_B$ während des schichtweisen Aufbaus des Gegenstands derart aufgebracht werden, dass die Laserbereichsenergiedichte $E_D$ im Bereich von 0,5-10 J/mm² liegt.

**5.** SLM-Prozess nach Anspruch 4, **dadurch gekennzeichnet, dass** die Laserbereichsenergiedichte $E_D$ im Bereich von 0,8 bis 5 J/mm² liegt.

**6.** SLM-Prozess nach Anspruch 5, **dadurch gekennzeichnet, dass** die Laserbereichsenergiedichte $E_D$ im Bereich von 1 bis 3,5 J/mm² liegt.

**7.** SLM-Prozess nach Anspruch 4, **dadurch gekennzeichnet, dass** Schichten aufgebracht werden, wobei eine Dicke jeder Schicht im Bereich von 0,01-0,1 mm liegt.

**8.** SLM-Prozess nach Anspruch 7, **dadurch gekennzeichnet, dass** Schichten aufgebracht werden, wobei eine Dicke jeder Schicht im Bereich von 0,02-0,05 mm liegt.

**9.** SLM-Prozess nach Anspruch 8, **dadurch gekennzeichnet, dass** Schichten aufgebracht werden, wobei eine Dicke jeder Schicht im Bereich von 0,03-0,04 mm liegt.

**Revendications**

**1.** Poudre de superalliage à base de nickel présentant une teneur élevée en précipitation gamma prime pour la fabrication d'additifs d'articles tridimensionnels **caractérisée en ce que** la poudre a la composition chimique suivante (en % en poids) : 15,7 à 16,3 pour le Cr, 8,0 à 9,0 pour le Co, 1,5 à 2,0 pour le Mo, 2,4 à 2,8 pour le W, 1,5 à 2,0 pour le Ta, 3,2 à 3,7 pour l'Al, 2,2 à 3,7 pour le Ti, 0,6 à 1,1 pour le Nb, 0,09 à 0,13 pour le C, 0,007 à 0,012 pour le B, $0,004 \leq Zr < 0,03$, $0,001 \leq Si < 0,03$, le reste étant constitué de Ni et d'éléments résiduels inévitables et dans laquelle la poudre a une distribution de la taille de poudre située entre 10 et 100 μm et une morphologie sphérique.

**2.** Poudre de superalliage à base de nickel selon la revendication 1, **caractérisée en ce que** la teneur max. en Si est de 0,02 % en poids.

**3.** Poudre de superalliage à base de nickel selon la revendication 1, **caractérisée en ce que** la teneur max. en Zr est de 0,02 % en poids.

**4.** Procédé de FSL (fusion sélective par laser) pour la fabrication d'additifs d'articles tridimensionnels à l'aide de la poudre de superalliage à base de nickel selon l'une quelconque des revendications 1 à 3, **caractérisé en ce que** la puissance du laser $P_L$, la vitesse de balayage $V_s$ et le diamètre du faisceau laser $D_B$ au cours de la fabrication couche par couche de l'article sont appliqués de manière à ce que la densité d'énergie de la surface du laser $E_D$ se situe dans la plage située entre 0,5 et 10 J/mm².

**5.** Procédé de FSL selon la revendication 4, **caractérisé en ce que** la densité d'énergie de la surface du laser $E_D$ se situe entre 0,8 et 5 J/mm².

**6.** Procédé de FSL selon la revendication 5, **caractérisé en ce que** la densité d'énergie de la surface du laser $E_D$ se situe entre 1 et 3,5 J/mm².

**7.** Procédé de FSL selon la revendication 4, **caractérisé en ce que** les couches sont appliquées avec une épaisseur de chaque couche située dans la plage de 0,01 à 0,1 mm.

**8.** Procédé de FSL selon la revendication 7 **caractérisé en ce que** les couches sont appliquées avec une épaisseur de chaque couche située dans la plage de 0,02 à 0,05 mm.

**9.** Procédé de FSL selon la revendication 8 **caractérisé en ce que** les couches sont appliquées avec une épaisseur de chaque couche située dans la plage de 0,03 à 0,04 mm.

**Fig. 1**       **(PRIOR ART)**

**Fig. 2**

**Fig. 3**

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009050563 A1
- EP 2589449 A1

**Non-patent literature cited in the description**

- **C.Y SU et al.** Activated diffusion brazed repair for IN738 hot section components of gas turbines. *Journal of Materials Processing Technology,* 1999, vol. 115 (3), 326-332
- **B. GEDDES ; H. LEON ; X. HUANG.** Superalloys, Alloying and performance. *ASM International,* 2010, 71-72
- **J. RISSE ; C. GOLEBIEWSKI ; W. MEINERS ; K. WISSENBACH.** Influence of process management on crack formation in nickel-based alloy parts (IN738LC). *RapidTech,* 14 May 2013